(19)

Europäisches Patentamt
European Patent Office
Office européen des brevets

(11) **EP 2 966 372 A1**

(12) **EUROPEAN PATENT APPLICATION**
published in accordance with Art. 153(4) EPC

(43) Date of publication:
**13.01.2016  Bulletin 2016/02**

(51) Int Cl.:
***F24F 11/02*** *(2006.01)*

(21) Application number: **13876080.6**

(22) Date of filing: **28.11.2013**

(86) International application number:
**PCT/JP2013/082096**

(87) International publication number:
**WO 2014/136330 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **04.03.2013   JP 2013042153**

(71) Applicant: **Kabushiki Kaisha Toshiba, Inc.
Tokyo 105-8001 (JP)**

(72) Inventors:
• **TAMARU, Shingo**
  **Tokyo 1058001 (JP)**
• **MURAYAMA, Dai**
  **Tokyo 1058001 (JP)**

• **MURAI, Masahiko**
  **Tokyo 1058001 (JP)**
• **HANADA, Yuuichi**
  **Tokyo 1058001 (JP)**
• **KIMURA, Koji**
  **Tokyo 1058001 (JP)**
• **TAMARU, Shingo**
  **Tokyo 1058001 (JP)**
• **TAKAGI, Yasuo**
  **Tokyo 1058001 (JP)**

(74) Representative: **Moreland, David et al
Marks & Clerk LLP
Aurora
120 Bothwell Street
Glasgow G2 7JS (GB)**

(54) **AIR-CONDITIONING CONTROL DEVICE AND STORAGE MEDIUM**

(57)    An air-conditioning control device according to an embodiment controls air conditioning in an air-conditioning zone by using a plurality of types of air conditioners each having a different air supply system. A setting unit sets air-conditioning load distribution of the air conditioners based on optimal load distribution functions generated based on models of the air conditioners so that total energy consumption of the air conditioners is reduced within a range of comfort of the air-conditioning zone set by a user. An output unit outputs, based on the load distribution set by the setting unit, control values for controlling the air conditioners to control devices of the air conditioners.

FIG.1

EP 2 966 372 A1

**Description**

FIELD

Embodiments of the present invention relate to an air-conditioning control device and a storage medium.

BACKGROUND

Air-conditioning equipment consumes about half of energy consumed by the entire building equipment in offices or houses. Thus, developing more energy-saving air-conditioning equipment greatly contributes to total energy saving of building equipment. In terms of saving energy consumed in air conditioning, many air-conditioning control devices have been proposed.

For example, Patent Literature 1 describes a technology that efficiently reduces energy consumption while considering comfort of the occupants.

The technology described in Patent Literature 1 is configured such that a temperature set value and a humidity set value for air supplied from an air conditioner to an air-conditioning target are calculated so that a sum of energy consumed by a refrigerator, a cooling tower, an outer air coil, a return air coil, a water pump, and a blast fan is a minimum value within a target set range of a comfort index set in advance, and the calculated set values are sent to the air conditioner and a heat source device.

Patent Literature 2 describes a technology relating to a commercial air-conditioning control system. The technology obtains conditions of various parts of the system that change every minute, acquires target instruction values with which the entire system can be most energy saving, and controls commercial air-conditioning systems.

The technology described in Patent Literature 2 is configured such that an optimal collaborative energy-saving controller acquires at least two types of target instruction values of those relating to management of cooling water, management of cold water, and management of cold air, and transmits the acquired target instruction values to controllers of constituent components of the system.

CITATION LIST

Patent Literature

Patent Literature 1: Japanese Patent Application Laid-open No. 2009-174825
Patent Literature 2: Japanese Patent Application Laid-open No. 2008-075977
Patent Literature 3: Japanese Patent Application Laid-open No. 2007-285579

SUMMARY

Problem to be Solved by the Invention

The technologies described in Patent Literature 1 and 2 supply, to an air-conditioning target, air that is a mixture of outdoor air with the temperature and humidity adjusted by an outdoor air coil and return air with the temperature and humidity adjusted by a return air coil.

Patent Literature 3 describes a technology that mixes a part of return air from an air-conditioning target with outdoor air by a damper, cools the mixed air at a direct expansion coil, mixes the cooled air with return air, and adjusts temperature and humidity of the air at a cold-warm water coil to supply the air to the air-conditioning target.

When an air-conditioning target uses an air-conditioning system that includes an outdoor air introducing air conditioner and a return air introducing air conditioner (such as an outdoor air conditioner and multi-split type air conditioners for commercial buildings), the technologies described above cannot determine set values relevant to air-conditioning operations because these air conditioners introduce different air and the same air-conditioning target has a plurality of types of air supply.

When an air-conditioning target uses an air-conditioning system that includes an outdoor air introducing air conditioner and a return air introducing air conditioner, efficiency and load distribution of each air conditioner need to be considered.

Means for Solving Problem

An air-conditioning control device of an embodiment controls air conditioning in an air-conditioning zone by using a plurality of types of air conditioners each having a different air supply system. The setting unit sets air-conditioning load distribution of the air conditioners based on optimal load distribution functions generated based on models of the air conditioners so that total energy consumption of the air conditioners is reduced within a range of comfort of the air-conditioning zone set by a user. The output unit outputs, based on the air-conditioning load distribution set by the setting unit, control values for controlling the air conditioners to controlling devices of the air conditioners.

BRIEF DESCRIPTION OF DRAWINGS

FIG. 1 is a schematic configuration diagram of an air-conditioning system of a first embodiment.
FIG. 2 is a schematic configuration block diagram of an air-conditioning control device.
FIG. 3 is a diagram illustrating the operation of an optimal load distribution set value calculation unit.
FIG. 4 is a diagram illustrating an operation of the optimal load distribution set value calculation unit of when a PMV range of an optimal load distribution function differs from a PMV range set by a user.
FIG. 5 is a flowchart illustrating a processing of the air-conditioning control device of the first embodiment.
FIG. 6 is a schematic configuration block diagram of an air-conditioning system of a second embodiment.
FIG. 7 is a diagram illustrating a modification of the second embodiment.
FIG. 8 is a schematic configuration block diagram of an air-conditioning system of a third embodiment.
FIG. 9 is a schematic configuration block diagram of an air-conditioning system of a fourth embodiment.

DETAILED DESCRIPTION

The following describes embodiments with reference to the accompanying drawings.
In the following description, a comfort index is used to calculate set values relevant to air-conditioning operations.
Examples of the comfort index include PMV, effective temperature, and corrected effective temperature. The embodiments describe a case in which PMV is used, for example.
Office buildings built recently have a good insulation property, and many personal computers and office automation appliances are used therein. Thus, air-conditioning systems used in the buildings operate in a cooling mode throughout the year in many cases. The embodiments below describe a case in which cooling-mode air conditioning is performed, for example.

[1] First Embodiment

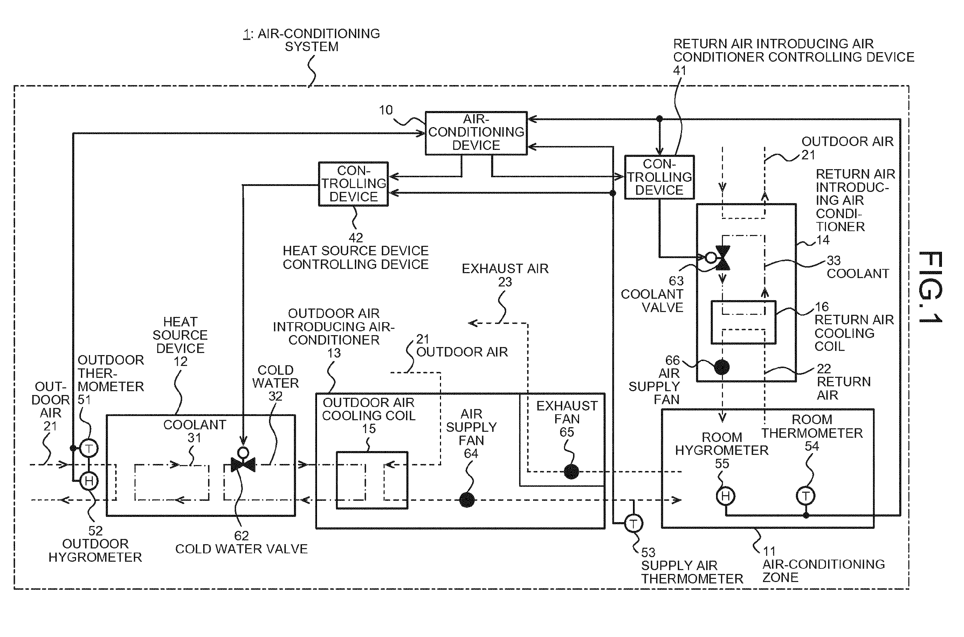

FIG. 1 is a schematic configuration diagram of an air-conditioning system of a first embodiment.
As illustrated in FIG. 1, an air-conditioning system 1 of the first embodiment includes: an air-conditioning control device 10 that controls the entire air-conditioning system 1; an air-conditioning zone (air-conditioned area) 11 as an air-conditioning target; a heat source device 12 that supplies heat source (cooling heat source in the present embodiment); an outdoor air introducing air conditioner 13 that introduces outdoor air to perform air conditioning; and a return air introducing air conditioner 14 that introduces air in the air-conditioning zone 11 to perform air conditioning.
In the configuration described above, the air-conditioning zone 11 is an air-conditioned room serving as a control zone of the air conditioners.
In a case of cooling a large building, for example, the building is so large that an air-conditioning system cannot control all the rooms collectively. Accordingly, the rooms are divided into a plurality of control zones, and each control zone is provided with a plurality of air conditioners, and the air-conditioning system controls the air conditioners. In order to simplify the description, each of the control zones is referred to as an air-conditioning zone.
Described next is the operation of the first embodiment.
The air-conditioning zone 11 is supplied with air by a plurality of air conditioners each introducing different air, and is provided with a room thermometer 54 that measures room temperature of the air-conditioning zone 11 and a room hygrometer 55 that measures room humidity. The outdoor air introducing air conditioner 13 and the return air introducing air conditioner 14 supply air to the air-conditioning zone 11 to maintain comfort of the occupants.
The heat source device 12 includes coolant 31 and a cold water valve 62.
The temperature of the coolant 31 is lowered by exchanging heat with the outdoor air 21.
The heat source device 12 generates cold water 32 by exchanging heat with the coolant 31 and supplies the generated cold water 32 to the outdoor air introducing air conditioner 13.

A heat source device controller 42 generates an opening control signal based on a supply air temperature set value and a current temperature value (supply air temperature current value). The supply air temperature set value is of the outdoor air introducing air conditioner 13 received from the air-conditioning control device 10. The current temperature value is measured by a supply air thermometer 53, and is a temperature of air currently supplied to the air-conditioning zone 11 of the outdoor air introducing air conditioner 13. Then, the heat source device controller 42 outputs the signal to the cold water valve 62.

Upon receipt of the opening control signal, the cold water valve 62 opens to the extent corresponding to the opening control signal to control supply air temperature of the outdoor air introducing air conditioner 13. Although the present embodiment describes the heat source device 12 that generates the cold water 32 to be distinguished from the coolant 31, the coolant 31 may be warm to generate warm water.

The outdoor air introducing air conditioner 13 includes an outdoor air cooling coil 15, an air supply fan 64, and an exhaust fan 65.

The outdoor air cooling coil 15 of the outdoor air introducing air conditioner 13 regulates the temperature of the introduced outdoor air 21 to a set temperature by exchanging heat with the cold water 32 generated by the heat source device 12.

The air supply fan 64 supplies the outdoor air 21 cooled by the outdoor air cooling coil 15 to the air-conditioning zone 11. The volume of air supplied to the air-conditioning zone 11 is controlled by the air supply fan 64.

The exhaust fan 65 discharges air in the air-conditioning zone 11 to the outside of the building as exhaust 23.

The volume of the exhaust 23 discharged from the air-conditioning zone 11 by the outdoor air introducing air conditioner 13 is determined by a set value on the supply air volume received from the air-conditioning control device 10.

In other words, the ratio of the supply air volume of the air supply fan 64 and the exhaust volume of the exhaust fan 65 is 1 to 1 so that no pressure difference occurs.

The air supply fan 64 may control the supply air volume of the outdoor air introducing air conditioner 13 to the air-conditioning zone 11 so that the concentration of $CO_2$ in the air-conditioning zone 11 is maintained constant.

The return air introducing air conditioner 14 includes a return air cooling coil 16, a coolant 33, a coolant valve 63 and an air supply fan 66.

The return air cooling coil 16 of the return air introducing air conditioner 14 regulates the temperature of the return air 22 to a set temperature by exchanging heat between the return air 22 taken from the air-conditioning zone 11 by actuating the air supply fan 66 and the coolant 33 cooled (temperature lowered) by heat exchange with the outdoor air 21.

While the temperature of the return air 22 is regulated, a return air introducing air conditioner controller 41 acquires a room temperature set value and a room humidity set value from the air-conditioning control device 10 and current values of the room thermometer 54 and the room hygrometer 55 that measure the temperature and humidity in the air-conditioning zone 11, and outputs an opening control signal to the coolant valve 63. Upon receipt of the opening control signal from the return air introducing air conditioner controller 41, the coolant valve 63 opens to the extent corresponding to the received opening control signal to regulate the temperature and humidity of the return air 22, that is, the temperature and humidity of the air supplied to the air-conditioning zone 11.

The air supply fan 66 supplies the return air 22 cooled by the return air cooling coil 16 to the air-conditioning zone 11.

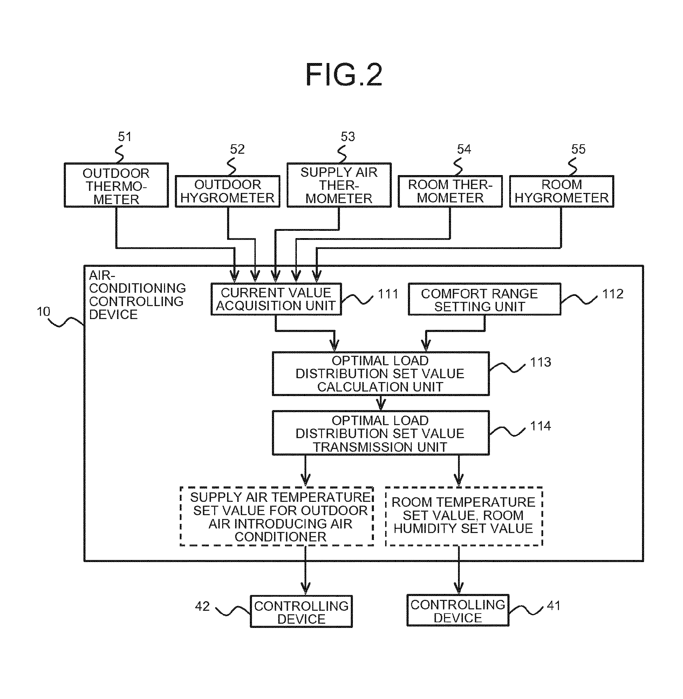

FIG. 2 is a schematic configuration block diagram of the air-conditioning control device.

As illustrated in FIG. 2, the air-conditioning control device 10 includes a current value acquisition unit 111, a comfort range setting unit 112, an optimal load distribution set value calculation unit 113, and an optimal load distribution set value transmission unit 114.

The current value acquisition unit 111 is connected to an outdoor thermometer 51, an outdoor hygrometer 52, the supply air thermometer 53, the room thermometer 54, the room hygrometer 55, and an airflow meter 56. With these sensors, the current value acquisition unit 111 acquires current values of outdoor temperature, outdoor humidity, supply air temperature, and temperature of the air-conditioning zone 11 (room temperature), humidity of the air-conditioning zone 11, and the volume of airflow supplied to the air-conditioning zone 11 by the outdoor air introducing air conditioner 13.

The comfort range setting unit 112 is operated by a user to set a comfort range (a PMV range) of the air-conditioning zone 11. In the first embodiment, the user sets the PMV range.

The optimal load distribution set value calculation unit 113 uses the current values acquired by the current value acquisition unit 111 and the PMV range acquired from the comfort range setting unit 112 to calculate set values for operations that optimize load distribution between the outdoor air introducing air conditioner 13 and the return air introducing air conditioner 14. Here, the current values are that of the outdoor temperature, the outdoor humidity, the supply air temperature, the temperature of the air-conditioning zone 11 (room temperature), the humidity of the air-conditioning zone 11, and the volume of airflow supplied to the air-conditioning zone 11 by the outdoor air introducing air conditioner 13.

Specifically, the optimal load distribution set value calculation unit 113 calculates set values relevant to the operations such that, while maintaining the concentration of $CO_2$ in the air-conditioning zone 11 in a certain range, the sum of the energy required to regulate the temperature and humidity of the outdoor air 21 introduced to the air-conditioning zone 11 to a desired temperature and humidity in the air-conditioning zone 11, and the energy required to regulate the temperature and humidity of the return air 22 taken from the air-conditioning zone 11 to a desired temperature and humidity required when the return air 22 is supplied to the air-conditioning zone 11 is the minimum value. This enables the optimal load distribution set value calculation unit 113 to optimize the load distribution between the outdoor air introducing air conditioner 13 and the return air introducing air conditioner 14.

The optimal load distribution set value transmission unit 114 transmits the set values, acquired from the optimal load distribution set value calculation unit 113, relevant to air-conditioning operations that optimizes load distribution to the heat source device controller 42 and the return air introducing air conditioner controller 41. In the first embodiment, a room temperature set value and a room humidity set value are transmitted to the return air introducing air conditioner controller 41, and a supply air temperature set value is transmitted to the heat source device controller 42 as the set values relevant to air-conditioning operations.

In the first embodiment, as described above, the room temperature set value and the room humidity set value are transmitted to the return air introducing air conditioner controller 41, and the supply air temperature set value is transmitted to the heat source device controller 42 as the set values relevant to air-conditioning operations. The set values, however, are not limited to these set values, and any set value may be used as long as it can be used to optimize load distribution.

The optimal load distribution set value calculation unit 113 can use a technology disclosed in, for example, Japanese Patent Application Laid-open No. 2011-027301 to calculate set values relevant to air-conditioning operations. Specifically, set values for controlling air-conditioning operations are calculated in advance by optimization calculation for each combination of a plurality of outdoor air conditions and a plurality of environmental conditions of an air-conditioning zone such that values of energy required for controlling air-conditioning operations are the minimum within a set PMV range, and optimal operation functions are generated that pass through the set values on all the conditions. Set values relevant to air-conditioning operations are determined by the optimal operation functions generated in advance and current environmental conditions and are transmitted to air conditioners.

With this method (technology), set values relevant to air-conditioning operations can be calculated with which energy consumption is the minimum within a (comfort: PMV) range in which occupants feel comfortable.

Described next is the operation of the optimal load distribution set value calculation unit 113 according to the first embodiment.

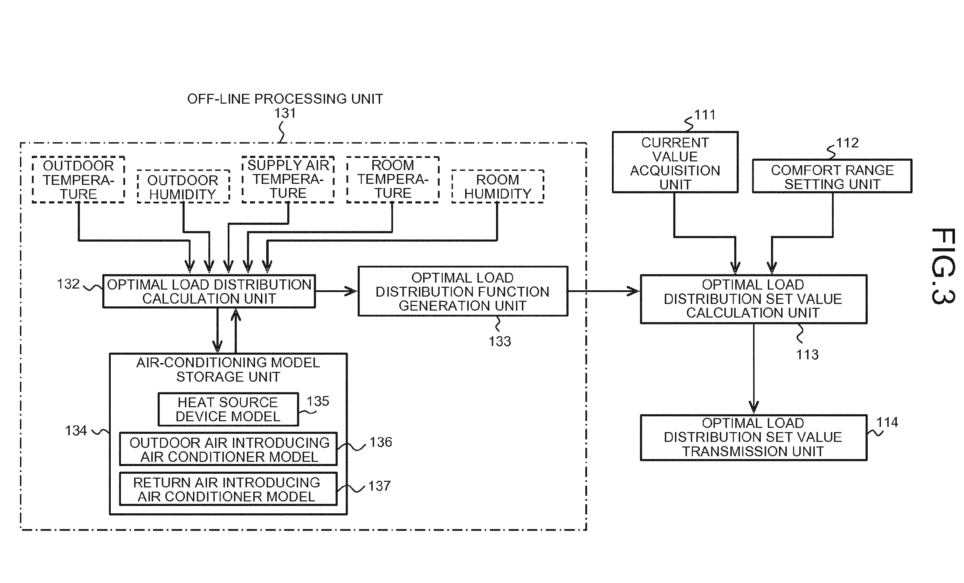

FIG. 3 is a diagram illustrating the operation of the optimal load distribution set value calculation unit.

The optimal load distribution set value calculation unit 113 acquires optimal load distribution functions generated by an off-line processing unit 131, and calculates optimal load distribution set values.

The off-line processing unit 131 is described.

Normally, the off-line processing unit 131 generates optimal load distribution functions while being offline from the optimal load distribution set value calculation unit 113.

This is because calculation load for generating optimal load distribution functions is so high that the optimal load distribution functions cannot be calculated in real time.

The off-line processing unit 131 includes an optimal load distribution calculation unit 132, an optimal load distribution function generation unit 133, and an air-conditioning model storage unit 134.

In the first embodiment, the air-conditioning model storage unit 134 stores therein information on configurations of the heat source device 12, the outdoor air introducing air conditioner 13, and the return air introducing air conditioner 14 that are the devices performing air-conditioning operations.

Thus, the air-conditioning model storage unit 134 according to the first embodiment stores therein a heat source device model 135 corresponding to the configuration of the heat source device 12, an outdoor air introducing air conditioner model 136 corresponding to the configuration of the outdoor air introducing air conditioner 13, and a return air introducing air conditioner model 137 corresponding to the configuration of the return air introducing air conditioner 14.

The optimal load distribution calculation unit 132 calculates a room temperature set value, a room humidity set value, and a supply air temperature set value with which load distribution of each air conditioner is optimized such that energy consumed in air-conditioning operations is the minimum within a PMV range set by a user for each combination of outdoor temperature, outdoor humidity, supply air temperature, room temperature, room humidity, the volume of airflow supplied by the outdoor air introducing air conditioner 13 each having a plurality of conditions.

In the first embodiment, the energy consumed in air-conditioning operations can be represented by Expression (1) below. Assuming that the outdoor air introducing air conditioner 13 includes a single air supply fan and the return air introducing air conditioner 14 is a multi-split type air conditioner for commercial buildings, energy consumed in air conditioning operations is represented by Expression (1) below.

$$\cdot \text{ Total energy consumption value } (E) = \text{energy consumption of the heat source device 12 } (E_{heat}) + \text{energy consumption of the outdoor air introducing air conditioner 13 } (E_{out}) + \text{energy consumption of the return air introducing air conditioner 14 } (E_{ra}) \tag{1}$$

$$\cdot \text{ Energy consumption of the heat source device } (E_{heat}) = Q_{heat}/COP$$

$$\cdot \text{ Energy consumption of the outdoor air introducing air conditioner } (E_{out}) = (F_{out} \times H)/(\eta \times 6120 \times 9.81)$$

$$\cdot \text{ Energy consumption of the return air introducing air conditioner } (E_{ra}) = E_{bmoutrat} \times f_1(Q_{bm}) \times f_2(T_{amb}, T_{r\_wb}) + E_{bmin}$$

Here, $Q_{heat}$ denotes a heat source load, COP denotes a heat source coefficient of performance, $F_{out}$ denotes the volume of introduced outdoor air, H denotes pressure, $\eta$ denotes efficiency, $E_{bmoutrat}$ denotes a rated electrical power consumption of an outdoor unit, $f_1$ denotes a first function, $f_2$ denotes a second function, $Q_{bm}$ denotes a load factor of a multi-split type system for commercial buildings, $T_{amb}$ denotes outdoor temperature, $T_{r\_wb}$ denotes wet-bulb temperature in the air-conditioning zone, and $E_{bmin}$ denotes electrical power consumption of an indoor unit.

With regard to searching for a dynamic equilibrium state of working fluid that minimizes the total energy consumption obtained by Expression (1), an algorithm (energy consumption minimizing algorithm) described in, for example, Japanese Patent Application Laid-open No. 2008-256258 may be used.

The optimal load distribution function generation unit 133 generates functions, as optimal load distribution functions, that cover all the set values calculated by the optimal load distribution calculation unit 132 for each of a room temperature set value, a room humidity set value, and a supply air temperature set value that can be set by a user. With regard to the combinations of the set values, combinations of a part of set values taken as samples can be used as long as the combinations satisfy generated optimal load distribution functions and can be used in practical use without any problems.

The optimal load distribution function generation unit 133 also generates a plurality of optimal load distribution functions corresponding to various PMV ranges. This enables the users to flexibly change the PMV range and enables the optimal load distribution set value calculation unit 113 to calculate a room temperature set value, a room humidity set value, and a supply air temperature set value with which load distribution between the outdoor air introducing air conditioner 13 and the return air introducing air conditioner 14 is optimized and with which energy consumption in air-conditioning operations is reduced within a certain PMV range.

Upon receipt of a plurality of optimal load distribution functions generated by the optimal load distribution function generation unit 133 corresponding to various PMV ranges, the optimal load distribution set value calculation unit 113 selects, as appropriate, optimal load distribution functions from the functions acquired from the optimal load distribution functions generation unit 133 on the basis of the outdoor temperature, outdoor humidity, supply air temperature, room temperature, room humidity, and volume of airflow acquired from the current value acquisition unit 111 and a PMV range acquired from the comfort range setting unit 112. The optimal load distribution set value calculation unit 113 calculates a room temperature set value, a room humidity set value, and a supply air temperature set value by using the selected optimal load distribution functions. When the optimal load distribution set value calculation unit 113 does not have enough space for storing a plurality of optimal load distribution functions, it may be configured to acquire needed optimal load distribution functions from the optimal load distribution functions generation unit 133 as appropriate.

Next, more specifically described is the operation of the optimal load distribution set value calculation unit 113 when a user changes the PMV range.

The following describes a case in which the optimal load distribution function generation unit 133 generates an optimal load distribution function F1 corresponding to a PMV range of $-0.5 \leq PMV \leq 0.5$, and an optimal load distribution function F2 corresponding to a PMV range of $-0.9 \leq PMV \leq 0.9$.

The optimal load distribution set value calculation unit 113 receives the optimal load distribution functions F1 and F2 generated by the optimal load distribution function generation unit 133.

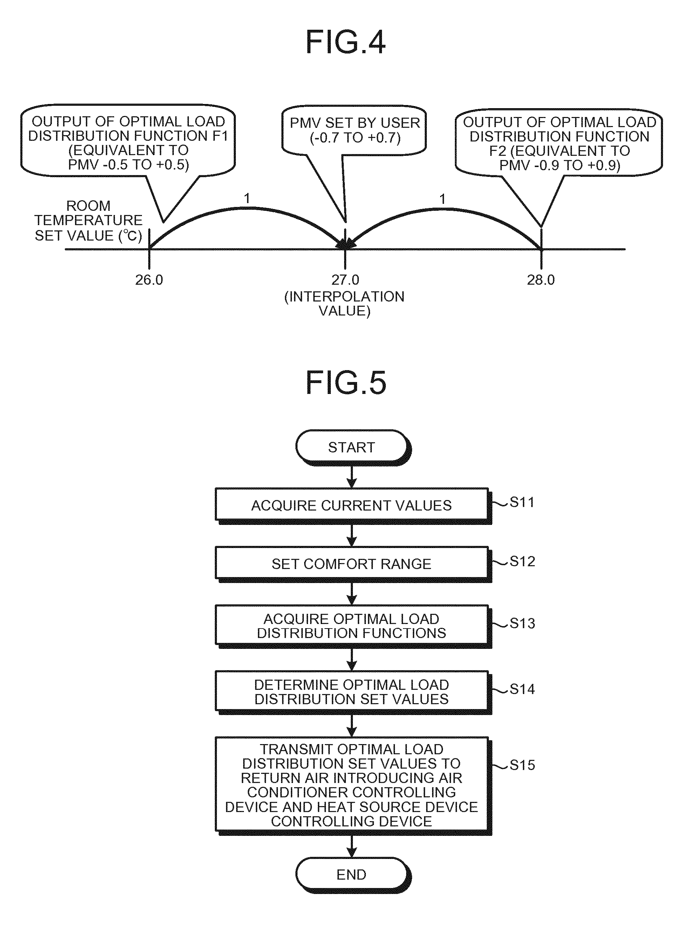

FIG. 4 is a diagram illustrating an operation of the optimal load distribution set value calculation unit when a PMV range of an optimal load distribution function differs from a PMV range set by a user.

As illustrated in FIG. 4, when a user sets a PMV range to $-0.7 \leq PMV \leq 0.7$ via the comfort range setting unit 112, the optimal load distribution set value calculation unit 113 calculates a room temperature (27°C in an example of FIG. 4) corresponding to the set PMV range of $-0.7 \leq PMV \leq 0.7$, by using interpolation in the case of the example of FIG. 4, from a room temperature set value (26°C in the example of FIG. 4) calculated by using the optimal load distribution function F1 and a room temperature set value (28°C in the example of FIG. 4) calculated by using the optimal load distribution function F2.

Although a room temperature set value is calculated in the above description, for example, a room humidity set value and a supply air temperature set value, or other set values relevant to air-conditioning operations are also calculated in the same manner as in the example above.

The optimal load distribution set value transmission unit 114 acquires, from the optimal load distribution set value calculation unit 113, all the set values required for controlling air-conditioning operations such as the room temperature set value, the room humidity set value, and the supply air temperature set value calculated by the optimal load distribution set value calculation unit 113. Then, the optical load distribution set value transmission unit 114 transmits them to the heat source device controller 42 and the return air introducing air conditioner controller 41.

Described next is the operation of the air-conditioning control device according to the first embodiment.

FIG. 5 is a flowchart illustrating the processing of the air-conditioning control device according to the first embodiment.

First, the air-conditioning control device 10 acquires current values from the respective sensors (Step S11).

The air-conditioning control device 10 then sets a comfort range (PMV range in the first embodiment) for the air-conditioning zone by user's operation (Step S12), and acquires optimal load distribution functions necessary for calculations (Step S13).

The air-conditioning control device 10 calculates optimal load distribution set values on the basis of the acquired optimal load distribution functions, and obtains them (Step S14).

The air-conditioning control device 10 transmits the obtained optimal load distribution set values to the return air introducing air conditioner controller 41 and the heat source device controller 42, and ends the processing (Step S15).

Accordingly, the return air introducing air conditioner controller 41 and the heat source device controller 42 each control air-conditioning operations on the basis of the received set values corresponding to the optimal load distribution.

As described above, according to the first embodiment, the air-conditioning control device generates, in advance, optimal load distribution functions corresponding to a certain range of a comfort index for each combination of outdoor temperature, outdoor humidity, supply air temperature, room temperature, room humidity, and the volume of airflow each having a plurality of conditions by using the heat source device model, the outdoor air introducing air conditioner model, and the return air introducing air conditioner model. This enables the air-conditioning control device to set set values relevant to air-conditioning operations of the air conditioners when a plurality of air supply systems, such as a combination of an air conditioner that introduces outdoor air (outdoor air introducing air conditioner) and an air conditioner that introduces return air from an air-conditioning zone (return air introducing air conditioner), exist in the same air-conditioning zone, whereby load distribution of each air conditioner can be optimized.

This also enables the air-conditioning control device to control air-conditioning operations within a range of a comfort index, thereby reducing as much energy consumption as possible within a comfort range of the occupants.

[1.1] Modification of First Embodiment

Although, in the first embodiment described above, the air-conditioning zone 11 illustrated in FIG. 1 is supplied with air by two types of air conditioners such as the outdoor air introducing air conditioner 13 and the return air introducing air conditioner 14, the same air-conditioning zone 11 may be supplied with air by a plurality of outdoor air introducing air conditioners 13 and a plurality of return air introducing air conditioners 14, for example. When an air-conditioning system includes a plurality of outdoor air introducing air conditioners 13 and return air introducing air conditioners 14, the air-conditioning control device outputs the same supply air temperature set value to the outdoor air introducing air conditioners and the same room temperature set value and the same room humidity set value to the return air introducing air conditioners as long as the air conditioners supply air to the same air-conditioning zone. In the first embodiment, as illustrated in FIG. 1, the air-conditioning control device 10 controls the heat source device 12, such as an air-cooled heat pump chiller, that does not include a cooling tower.

Although, in the first embodiment described above, PMV is used as a comfort index, the comfort index may be other parameters such as effective temperature, operative temperature, or corrected effective temperature. Whatever parameter is selected, the air-conditioning control device 10 can determine set values relevant to air-conditioning operations with which load distribution of each air conditioner is optimized such that energy consumption can be reduced (more preferably minimized) within a comfort range of a comfort index even when the same air-conditioning zone is supplied with air by a plurality of air conditioners each introducing different air.

[2] Second Embodiment

Described next is a second embodiment.

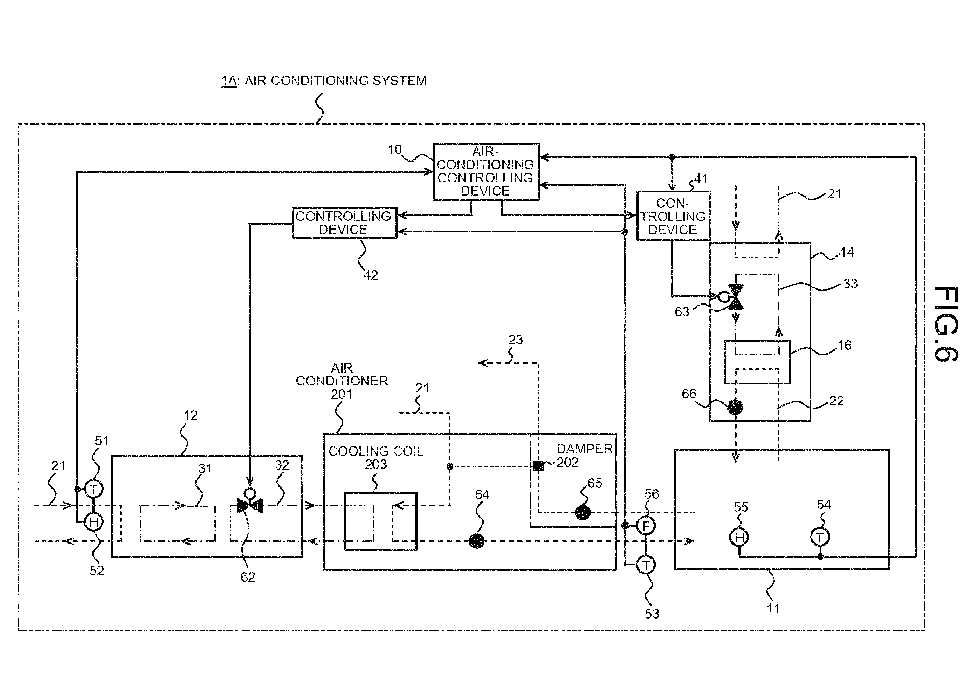

FIG. 6 is a schematic configuration block diagram of an air-conditioning system according to the second embodiment.

In FIG. 6, the same reference signs are given to the same constituent parts.

An air-conditioning system 1A according to the second embodiment includes the air-conditioning control device 10, the air-conditioning zone 11, the heat source device 12, an air conditioner 201 instead of the outdoor air introducing air conditioner 13, and the return air introducing air conditioner 14.

In the configuration described above, the air conditioner 201 includes a damper 202, a cooling coil 203, the air supply fan 64, and the exhaust fan 65.

The damper 202 mixes the outdoor air 21 introduced from the outside of the building by the air conditioner 201 and the air taken from the air-conditioning zone 11 by the exhaust fan 65 and controls the proportion of the outdoor air 21 and the air taken from the air-conditioning zone 11. In other words, the damper 202 determines the proportion of the outdoor air in the air supplied by the air conditioner 201. The volume of airflow supplied to the air-conditioning zone 11 by the air conditioner 201 is controlled by the air supply fan 64.

The cooling coil 203 regulates, to a set temperature, the temperature of the air mixed by the damper 202 by exchanging heat with the cold water 32 generated by the heat source device 12. The volume of airflow supplied by the air conditioner 201 to the air-conditioning zone 11 may be controlled by the air supply fan 64 such that the pressure in the air supply duct is stable while the concentration of $CO_2$ in the air-conditioning zone 11 is maintained by taking the outdoor air 21 by the damper 202.

The air-conditioning control device 10 according to the second embodiment stores, in the air-conditioning model storage unit 134, an air conditioner model that mixes outdoor air and return air instead of the outdoor air introducing air conditioner model 136 according to the first embodiment as one of the models used for generating optimal load distribution functions in the off-line processing unit 131.

The optimal load distribution calculation unit 132 calculates, for the stored air conditioner model that mixes outdoor air and return air, a room temperature set value, a room humidity set value, and a supply air temperature set value with which load distribution of each air conditioner is optimized such that energy consumption in air-conditioning operations is reduced, or more preferably minimized, within a PMV range set by a user for each combination of outdoor temperature, outdoor humidity, supply air temperature, room temperature, room humidity, and the volume of airflow each having a plurality of conditions.

The operation of the air-conditioning control device according to the second embodiment is the same as that of the first embodiment illustrated in FIG. 5, and thus, refer to the above description for the details of the operation according to the second embodiment.

According to the second embodiment, mixing the outdoor air 21 and the air taken from the air-conditioning zone 11 can reduce heat to be cooled by the cooling coil 203 because the temperature and humidity of the mixed air are closer to those of the air-conditioning zone 11 than those of the outdoor air. This enables the air-conditioning system according to the second embodiment to largely reduce energy consumed in air-conditioning operations than the air-conditioning system according to the first embodiment. The operation of the air-conditioning control device 10 is the same as that of the first embodiment, and the air-conditioning control device 10 can determine set values relevant to air-conditioning operations with which load distribution of each air conditioner is optimized. The air-conditioning control device 10 controls air-conditioning operations within a range of a comfort index. This can reduce energy consumption within a comfort range of the occupants.

[2.1] Modification of Second Embodiment

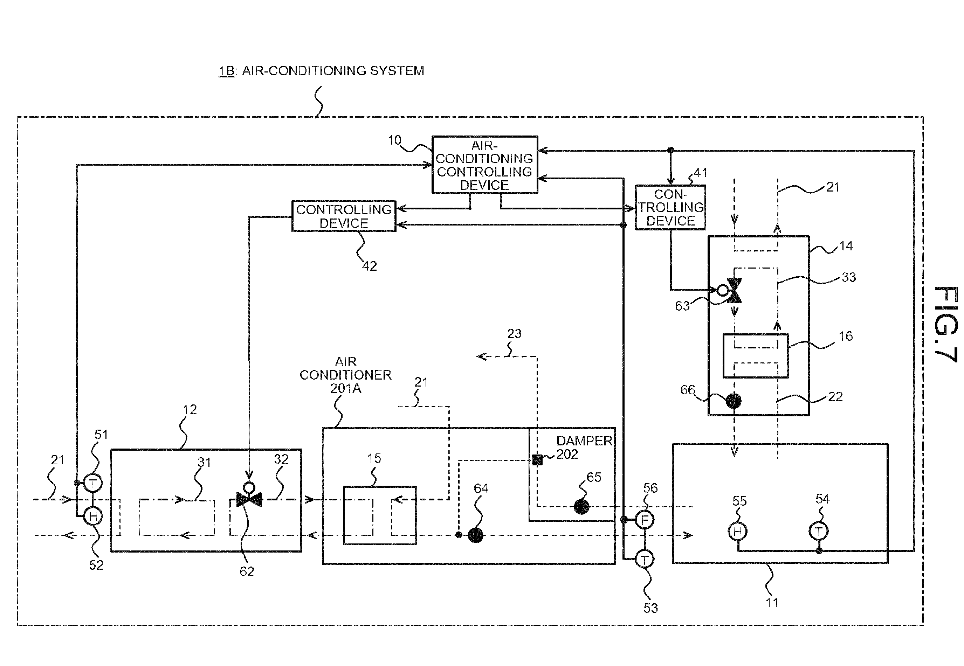

FIG. 7 is a diagram illustrating a modification of the second embodiment.

In the air-conditioning system according to the second embodiment described above, the outdoor air 21 and the air taken from the air-conditioning zone 11 are mixed, and the temperature of the mixed air is regulated to a set temperature by the cooling coil. In an air-conditioning system 1B according to the modification of the second embodiment, an air conditioner 201A included instead of the air conditioner 201 may mix the outdoor air 21 cooled by the outdoor air cooling coil 15 and the air taken from the air-conditioning zone 11 and supply the mixed air to the air-conditioning zone as illustrated in FIG. 7.

According to the modification of the second embodiment, when the same air-conditioning zone is supplied with air by a plurality of air conditioners each introducing different air, energy consumption can be reduced within a range of a comfort index (such as PMV) set by a user, and more preferably, energy consumption is minimized. Set values relevant to air-conditioning operations can be surely determined with which load distribution of each air conditioner is optimized.

[3] Third Embodiment

Described next is a third embodiment.

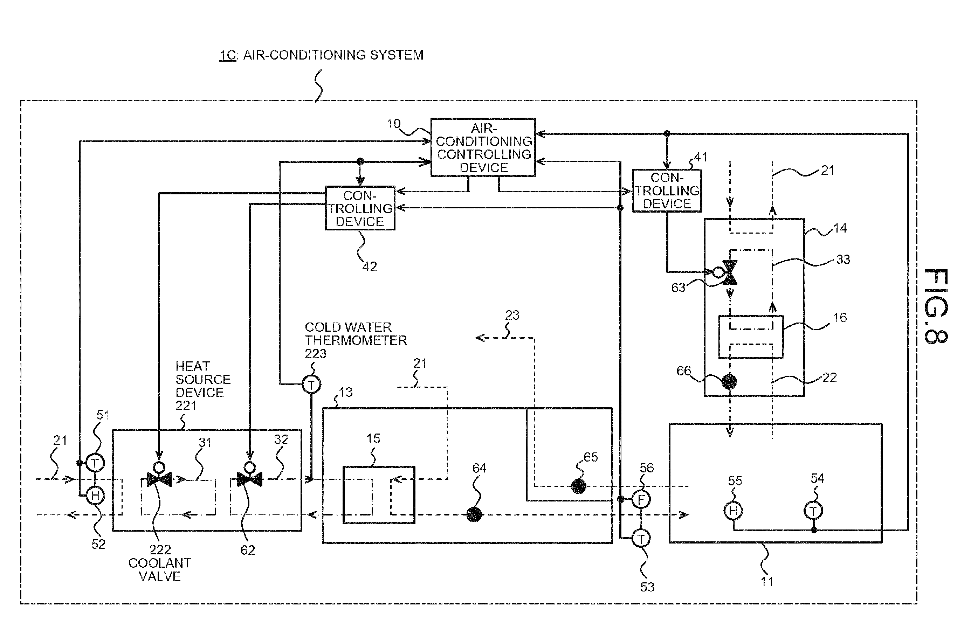

FIG. 8 is a schematic configuration block diagram of an air-conditioning system according to the third embodiment.

In FIG. 8, the same reference signs are given to the same constituent parts as those illustrated in FIG. 1 according to the first embodiment.

An air-conditioning system 1C according to the third embodiment includes the air-conditioning control device 10, the air-conditioning zone 11, a heat source device 221 instead of the heat source device 12, the outdoor air introducing air conditioner 13, and the return air introducing air conditioner 14.

In the configuration described above, the heat source device 221 includes the coolant 31, the cold water valve 62, and a coolant valve 222.

The heat source device controller 42 acquires a temperature set value for the cold water 32 transmitted from the air-conditioning control device 10 and a current value of the cold water temperature transmitted by a cold water thermometer 223 measuring the temperature of the coolant 31. Then, the heat source device controller 42 outputs, to the coolant valve 222, an opening control signal that controls the opening of the coolant valve 222.

The coolant valve 222 changes the opening of the valve on the basis of the opening control signal input from the heat source device controller 42 to control the temperature of the coolant 31.

Described next is the operation of the optimal load distribution set value calculation unit 113 according to the third embodiment.

The air-conditioning control device 10 according to the third embodiment stores, in the air-conditioning model storage unit 134, an outdoor air introducing air conditioner model including the coolant valve 222 instead of the outdoor air introducing air conditioner model 136 according to the first embodiment as one of the models used for generating optimal load distribution functions in the off-line processing unit 131.

The optimal load distribution calculation unit 132 calculates a room temperature set value, a room humidity set value, a supply air temperature set value, and a cold water temperature set value with which energy consumption in air-conditioning operations is further reduced, or more preferably, minimized within a PMV range set by a user for each combination of outdoor temperature, outdoor humidity, supply air temperature, room temperature, room humidity, and the volume of airflow each having a plurality of conditions.

The optimal load distribution functions generation unit 133 generates functions, as optimal load distribution functions, that cover all the set values calculated by the optimal load distribution calculation unit 132 for each of a room temperature set value, a room humidity set value, a supply air temperature set value, and a cold water temperature set value. In this case, the optimal load distribution function generation unit 133 also generates a plurality of optimal load distribution functions corresponding to various PMV ranges as in the case of the first embodiment.

The optimal load distribution set value calculation unit 113 acquires optimal load distribution functions from the optimal load distribution function generation unit 133 on the basis of the outdoor temperature, outdoor humidity, supply air temperature, room temperature, and room humidity acquired from the current value acquisition unit 111 and a PMV range acquired from the comfort range setting unit 112. Then, in a manner similar to that of the first embodiment, the optical load distribution set value calculation unit 113 calculates a room temperature set value, a room humidity set value, a supply air temperature set value, and a cold water set value.

The optimal load distribution set value transmission unit 114 acquires the set values calculated by the optimal load distribution set value calculation unit 113 and transmits them to the heat source device controller 42 and the return air introducing air conditioner controller 41.

According to the third embodiment, the temperature of the cold water 32 can be controlled by using the coolant valve 222 of the heat source device 221. This enables the air-conditioning control device to determine set values relevant to air-conditioning operations in consideration of energy consumed by the heat source device 221 on generating cold water. This configuration can reduce energy consumption to a larger extent than the configuration in the first embodiment.

[4] Fourth Embodiment

Described next is a fourth embodiment.

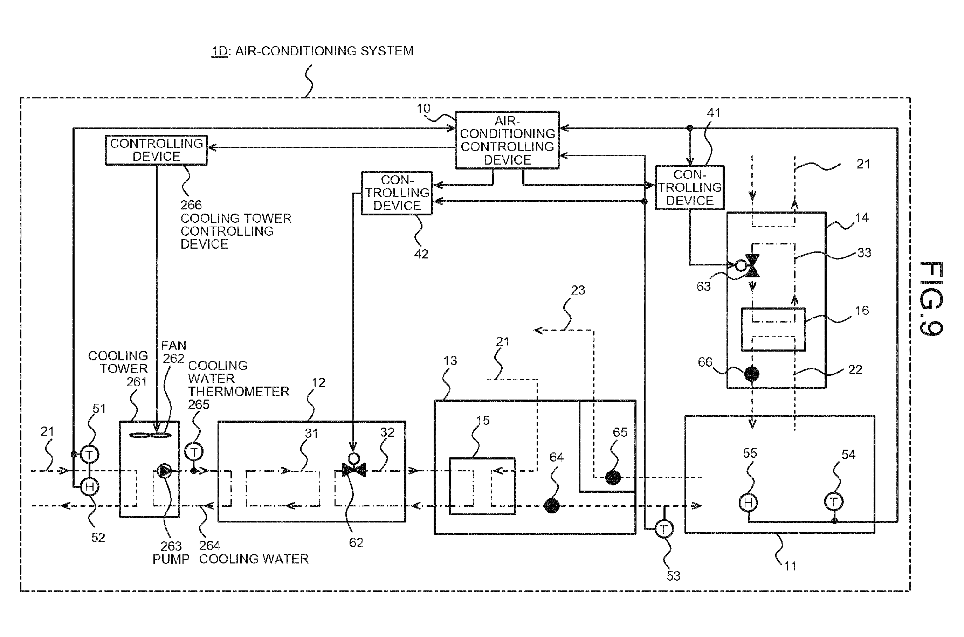

FIG. 9 is a schematic configuration block diagram of an air-conditioning system according to the fourth embodiment.
In FIG. 9, the same reference signs are given to the same constituent parts as those illustrated in FIG. 1 according to the first embodiment.
An air-conditioning system 1D according to the fourth embodiment includes the air-conditioning control device 10, the air-conditioning zone 11, the heat source device 12, the outdoor air introducing air conditioner 13, the return air introducing air conditioner 14, and a cooling tower 261.
In the configuration described above, the cooling tower 261 includes a fan 262 and a pump 263. The cooling tower 261 supplies a certain amount of cooling water 264 cooled by exchanging heat with the outdoor air 21 to the heat source device 12 using the pump 263.
The temperature of the coolant 31 of the heat source device 12 is lowered by exchanging heat with the cooling water 264 supplied from the cooling tower 261.
A cooling tower controlling device 266 acquires a temperature set value for the cooling water 264 transmitted from the air-conditioning control device 10 and a current value of a cooling water thermometer 265 measuring the temperature of the cooling water 264 supplied to the heat source device 12. Then, the cooling tower controlling device 266 outputs a fan control signal for controlling the temperature of the cooling water 264 to the fan 262.
The fan 262 controls the temperature of the cooling water 264 on the basis of the input fan control signal.
Described next is the operation of the optimal load distribution set value calculation unit 113 according to the fourth embodiment.
The air-conditioning control device 10 according to the fourth embodiment stores, in the air-conditioning model storage unit 134, a cooling tower model in addition to the heat source device model 135, the outdoor air introducing air conditioner model 136, and the return air introducing air conditioner model 137 as one of the models used for generating optimal load distribution functions in the off-line processing unit 131.
The optimal load distribution calculation unit 132 calculates, for the stored air-conditioning models, a room temperature set value, a room humidity set value, a supply air temperature set value, and a cooling water temperature set value with which load distribution of each air conditioner is optimized such that the energy consumption in air-conditioning operations is reduced, or more preferably minimized, within a PMV range set by a user for each combination of outdoor temperature, outdoor humidity, supply air temperature, room temperature, room humidity, and the volume of airflow each having a plurality of conditions.
In the fourth embodiment, the energy consumed in air-conditioning operations can be represented by Expression (2) below.

$$\cdot \text{ Total energy consumption value } (E) = \text{energy consumption of the heat source device } (E_{heat}) + \text{energy consumption of the outdoor air introducing air conditioner } (E_{out}) + \text{energy consumption of the return air introducing air conditioner } (E_{ra}) + \text{energy consumption of the cooling tower } (E_c) \qquad (2)$$

$$\cdot \text{ Energy consumption of the cooling tower } (E_c) = E_{fan} + E_{pump}$$

Here, $E_{fan}$ denotes energy consumption of the cooling tower fan and $E_{pump}$ denotes energy consumption of the cooling water pump.
The air-conditioning control device 10 according to the fourth embodiment obtains optimal load distribution set values from optimal load distribution functions generated in advance on the basis of current values acquired from the respective sensors and a comfort range of the air-conditioning zone set by a user. The air-conditioning control device 10 transmits the obtained optimal load distribution set values to the return air introducing air conditioner controller 41, the heat source device controller 42, and the cooling tower controlling device 266.

With the configuration described above, according to the fourth embodiment, air-conditioning equipment including the cooling tower 261 in addition to the heat source device 11, the outdoor air introducing air conditioner 13, and the return air introducing air conditioner 14 can determine set values relevant to air-conditioning operations with which load distribution of each air conditioner is optimized. The air-conditioning operations are controlled within a range of a comfort index, thereby reducing energy consumption within a comfort range of the occupants.

[5] Effect of Embodiments

According to the embodiments described above, energy consumption of air-conditioning equipment can be reduced within a range of a comfort index desired (set) by a user.

[6] Modifications of Embodiments

A control program executed by the air-conditioning control device according to the embodiments above is recorded and provided in a computer-readable recording medium such as a compact disc read only memory (CD-ROM), a flexible disk (FD), a compact disc recordable (CD-R), and a digital versatile disc (DVD), as an installable or executable file.

The control program executed by the air-conditioning control device according to the embodiments above may be stored in a computer connected to a network such as the Internet and provided by being downloaded via the network. Furthermore, the control program executed by the air-conditioning control device according to the embodiments above may be provided or distributed via a network such as the Internet.

The control program executed by the air-conditioning control device according to the embodiments above may be embedded and provided in a ROM, for example.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the spirit of the disclosure. The accompanying claims and their equivalents are intended to cover such forms or modifications as would fall within the scope and spirits of the disclosure.

**Claims**

1. An air-conditioning control device that controls air conditioning in an air-conditioning zone by using a plurality of types of air conditioners each having a different air supply system, the air-conditioning control device comprising:

   a setting unit that sets air-conditioning load distribution of the air conditioners based on optimal load distribution functions generated based on models of the air conditioners so that total energy consumption of the air conditioners is reduced within a range of comfort of the air-conditioning zone set by a user; and
   an output unit that outputs, based on the air-conditioning load distribution set by the setting unit, control values for controlling the air conditioners to controlling devices of the air conditioners.

2. The air-conditioning control device of Claim 1, wherein the air conditioners include a return air introducing air conditioner.

3. The air-conditioning control device of Claim 1 or 2, wherein the air conditioners include an outdoor air introducing air conditioner.

4. The air-conditioning control device of Claim 3, wherein the outdoor air introducing air conditioner includes a damper that mixes outdoor air and air in the air-conditioning zone.

5. The air-conditioning control device of Claim 3 or 4, wherein the setting unit includes an acquisition unit connected to a functions generation unit generating the optimal load distribution functions based on outdoor temperature, outdoor humidity, supply air temperature of the outdoor air introducing air conditioner, temperature in the air-conditioning zone, humidity in the air-conditioning zone, a volume of air supplied by the outdoor air introducing air conditioner, and the models of the air conditioners, the acquisition unit acquiring the optimal load distribution functions.

6. The air-conditioning control device of any one of Claims 3 to 5, wherein the control values include a supply air temperature set value for the outdoor air introducing air conditioner and a room temperature set value and a room humidity set value for the return air introducing air conditioner.

7. The air-conditioning control device of any one of Claims 3 to 6, wherein the setting unit sets the air-conditioning load distribution based on optimal load distribution functions generated based on a model of a heat source device that controls temperature of cold water supplied to the outdoor air introducing air conditioner, in addition to the models of the air conditioners.

8. The air-conditioning control device of any one of Claims 1 to 7, wherein the setting unit sets the air-conditioning load distribution based on optimal load distribution functions generated based on a model of a cooling tower that cools the heat source device, in addition to the models of the air conditioners and the model of the heat source device.

9. The air-conditioning control device of any one of Claims 1 to 8, wherein the comfort is represented by any one comfort index selected from PMV, effective temperature, and corrected effective temperature.

10. The air-conditioning control device of any one of Claims 1 to 9, wherein the setting unit sets the air-conditioning load distribution of the air conditioners so that the total energy consumption of the air conditioners is minimized within the range of the comfort of the air-conditioning zone.

11. A computer-readable storage medium that stores therein a control program executed by a computer to control an air-conditioning control device controlling air conditioning in an air-conditioning zone by using a plurality of types of air conditioners each having a different air supply system, the storage medium storing the control program causing the computer to execute:

a setting function that sets air-conditioning load distribution of the air conditioners based on optimal load distribution functions generated based on models of the air conditioners so that total energy consumption of the air conditioners is reduced within a range of comfort of the air-conditioning zone set by a user; and
an output function that outputs, based on the air-conditioning load distribution set by the setting function, control values for controlling the air conditioners to control devices of the air conditioners.

# FIG.1

# FIG.2

# FIG.3

# FIG.4

OUTPUT OF OPTIMAL LOAD
DISTRIBUTION FUNCTION F1
(EQUIVALENT TO
PMV -0.5 TO +0.5)

PMV SET BY USER
(-0.7 TO +0.7)

OUTPUT OF OPTIMAL LOAD
DISTRIBUTION FUNCTION
F2 (EQUIVALENT TO
PMV -0.9 TO +0.9)

ROOM
TEMPERATURE
SET VALUE (℃)

1          1

26.0                    27.0                    28.0
                  (INTERPOLATION
                      VALUE)

# FIG.5

START

ACQUIRE CURRENT VALUES                    S11

SET COMFORT RANGE                    S12

ACQUIRE OPTIMAL LOAD
DISTRIBUTION FUNCTIONS                    S13

DETERMINE OPTIMAL LOAD
DISTRIBUTION SET VALUES                    S14

TRANSMIT OPTIMAL LOAD
DISTRIBUTION SET VALUES TO
RETURN AIR INTRODUCING AIR
CONDITIONER CONTROLLING
DEVICE AND HEAT SOURCE DEVICE
CONTROLLING DEVICE                    S15

END

# FIG.6

1A: AIR-CONDITIONING SYSTEM

# FIG.7

# FIG.8

# FIG.9

## INTERNATIONAL SEARCH REPORT

| International application No. |
| --- |
| PCT/JP2013/082096 |

A. CLASSIFICATION OF SUBJECT MATTER
*F24F11/02(2006.01)i*

According to International Patent Classification (IPC) or to both national classification and IPC

B. FIELDS SEARCHED

Minimum documentation searched (classification system followed by classification symbols)
F24F11/02

Documentation searched other than minimum documentation to the extent that such documents are included in the fields searched
Jitsuyo Shinan Koho 1922–1996 Jitsuyo Shinan Toroku Koho 1996–2014
Kokai Jitsuyo Shinan Koho 1971–2014 Toroku Jitsuyo Shinan Koho 1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2012-63117 A (Kajima Corp.), 29 March 2012 (29.03.2012), paragraphs [0009] to [0059]; fig. 1 (Family: none) | 1-11 |
| Y | JP 2012-37159 A (Mitsubishi Electric Corp.), 23 February 2012 (23.02.2012), claim 4; paragraphs [0016] to [0263]; all drawings (Family: none) | 1-11 |

☐ Further documents are listed in the continuation of Box C. ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 28 January, 2014 (28.01.14) | 04 February, 2014 (04.02.14) |

| Name and mailing address of the ISA/ Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009174825 A
- JP 2008075977 A
- JP 2007285579 A
- JP 2011027301 A
- JP 2008256258 A